# EUROPÄISCHE PATENTANMELDUNG

(11) **EP 0 737 632 A1**
(43) Veröffentlichungstag der Anmeldung: **16.10.1996**
(21) Anmeldenummer: 96101843.9
(22) Anmeldetag: 08.02.1996
(51) Int. Cl.: B65G 1/10

(54) **Vorrichtung zum Zwischenspeichern von Produktionsgütern**

(30) Priorität: 10.04.1995 DE 19512960; 13.06.1995 DE 19521495
(71) Anmelder: trio-technik Maschinenbau GmbH, 58566 Kierspe (DE)
(72) Erfinder: Holger, Adolf, D-58566 Kierspe (DE); Reuber, Werner, D-58566 Kierspe (DE)
(74) Vertreter: Rösler, Uwe

(57) **Zusammenfassung**

Beschrieben wird eine Vorrichtung zum Zwischenspeichern von Produktionsgütern, mit wenigstens zwei vertikal übereinander angeordneten Speichereinheiten (2), die jeweils ein angetriebenes Speicherband (5) in horizontaler Erstreckung aufweisen.

Die Erfindung zeichnet sich dadurch aus, daß die Speichereinheiten (2) horizontal bewegbar sind und an einem bestimmten horizontalen Auslenkungort, der Befüllposition (A), mit Produktionsgütern von einer Handhabungseinheit direkt befüllbar sind. Ferner zeichnet sich die Erfindung dadurch aus, daß die horizontale Auslenkung der Speichereinheit (2) derart erfolgt, daß das mit einem bestimmten Umlaufsinn angetriebene Endlosspeicherband (5) relativ zum Trägerrahmen (T) fixierbar ist, bis eine gewünschte Auslenkposition erreicht ist und entsprechend eine Rückführung der ausgelenkten Speichereinheit (2) in die Ausgangsposition mit umgekehrten Umlaufsinn des angetriebenen Endlosspeicherbandes (5) erfolgt.

## Beschreibung

Die Erfindung bezieht sich eine Vorrichtung zum Zwischenspeichern von Produktionsgütern, und weist wenigstens zwei vertikal übereinander angeordnete Speichereinheiten auf, die jeweils ein angetriebenes Speicherband in horizontaler Erstreckung vorsehen.

Bei der industriellen Herstellung von Produktionsgütern, die weitgehend ohne Eingriff menschlicher Arbeitskraft gefertigt werden, sind automatisierte Arbeitsprozesse derart miteinander zu verketten, so daß ein kontinuierlicher Produktionsgüterfluß zu gewährleisten ist. Insbesondere bei der Aufeinanderfolge zweier Arbeitsprozesse, die jeweils unterschiedliche Prozeßzeiten benötigen, um das zu fertigende Produktionsgut zu behandeln, ist es erforderlich, daß zur Aufrechterhaltung eines kontinuierlichen Produktionsgutflusses ein sogenannter Produktpuffer oder Produktzwischenspeicher zwischen den aufeinanderfolgenden Arbeitsprozeßschritten geschaltet wird. Derartige Zwischenspeicher sind nötig, wenn ein Arbeitsschritt mit geringer Taktrate einem vorgehenden Arbeitsprozeß mit hoher Taktrate folgt. Ebenfalls nötig oder sinnvoll sind derartige Zwischenspeicher, um in personalarmen oder personalfreien Schichten, Produktionsgut welches maschinell erstellt wird zu speichern, um somit die Kapazitäten der Industriemaschinen zu erhöhen bzw. zu 100 % voll auszunutzen, ohne daß Personal für diese automatisierten Fertigungen permanent erforderlich ist. (Rationalisierungseffekt durch personalarme bzw. personalfreie Schichten)

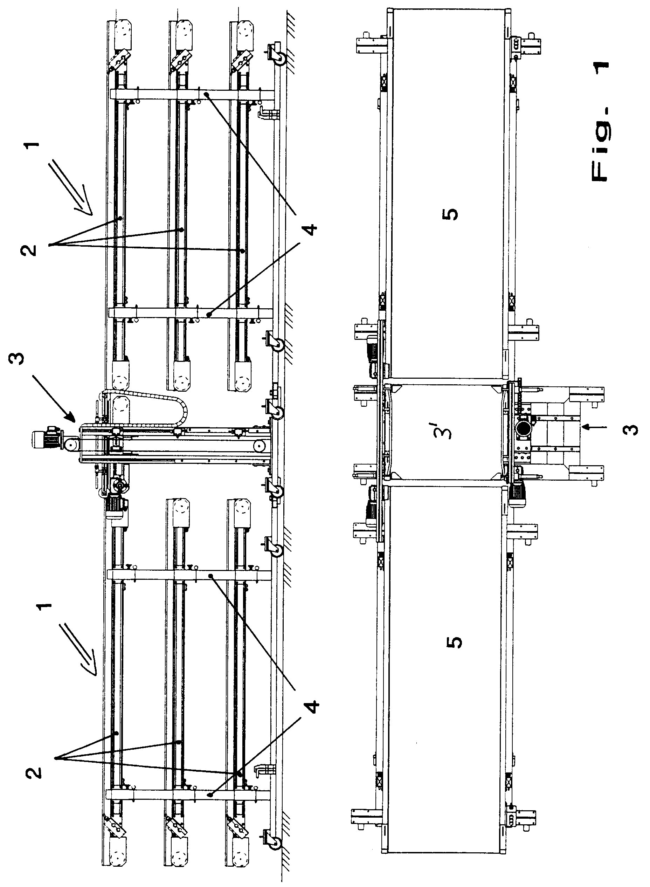

Es sind Zwischenspeichersysteme bekannt, die endlos geführte Speicherbänder aufweisen, auf denen die zwischenzuspeichernden Produktionsgüter mit Hilfe von Hubstationen abgelegt werden können. Aus der Fig. 1 geht ein an sich bekannter Zwischenspeicher hervor, der aus zwei sich gegenüberstehenden Zwischenspeicherungssystemen 1 besteht, zwischen denen eine maschninelle Hubstation 3 angeordnet ist. Die Hubstation 3 wird durch einen Roboter mit Teilen beladen, die aus einer anderen Maschine entnommen worden sind. Die Hubstation 3 bringt nachfolgend die Teile in die entsprechende Ebene und übergibt sie dort auf die vorgesehenen Speichereinheiten 2, die taktweise angetrieben sind. Nach jeder einzelnen Übergabe eines Produktionsgutes von der Hubstation 3 auf einen Speicherbandplatz, wird das Speicherband, das beladen wird, um eine Position weitergetaktet, so daß auf diese Weise das komplette Speicherband vollständig mit Teilen gefüllt werden kann. Sobald eine Ebene der Speicherbänder vollständig mit Teilen gefüllt ist, übergibt die Hubstation die nächsten Teile nacheinander in die jeweils anderen Etagen bis der Zwischenspeicher komplett gefüllt ist. Vollständig gefüllte Speicherbandetagen können jederzeit manuell oder maschinell entsorgt werden, so daß diese Speicherbänder zur Befüllung wieder zur Verfügung stehen.

Unter dem Aspekt der Reduzierung des für die automatische Herstellung von Produktionsgütern erforderlichen Geräteaufwandes und damit verbunden, die anfallenden Herstellungskosten zu reduzieren, ist es vorteilhaft, ohne die vorstehend beschriebene Hubstation auszukommen, da diese einen nicht unerheblichen gerätetechnischen Aufwand erfordert und somit auf die Kostenfindung maßgeblichen Einfluß nimmt.

Darüberhinaus erfordert der taktweise Antrieb der einzelnen Speicherbänder motorische Antriebe, die in an sich bekannter Weise an jedem Speicherband einzeln vorgesehen sind. Neben den ANtirben für den Taktbetrieb sind ferner Linearführungseinheiten vorgesehen, durch die jede einzelne Speicherebene horizontal verschoben werden kann. Durch die dezentrale motorische Ansteuerung jedes einzelnen Speicherbandes wird jedoch der konstruktive Aufwand erheblich erhöht.

Der Erfindung liegt die Aufgabe zugrunde, eine Vorrichtung zum Zwischenspeichern von Produktionsgütern, mit wenigstens zwei vertikal übereinander angeordneten Speichereinheiten, die jeweils ein angetriebenes Speicherband in horizontaler Erstreckung aufweisen, derart weiterzubilden, daß der Gesamtgeräteaufwand reduziert und insbesondere der Einsatz der Hubstation vollständig entfallen soll. Ferner soll der Einsatz motorischer Antriebe für die einzelnen Speichereinheiten auf ein Minimum reduziert werden, so daß die konstruktive Auslegung der Gesamtanordnung so einfach und kostengünstig wie möglich ausgeführt werden kann, ohne die Einsatzmöglicheiten der Anlage zu begrenzen.

Die Lösung der, der Erfindung zugrundeliegenden Aufgabe ist im Patentanspruch 1 und 12 angegeben. Vorteilhafte Ausführungsformen sind den Ansprüchen 2 bis 11 sowie 13 ff. zu entnehmen.

Erfindungsgemäß wird eine Vorrichtung zum Zwischenspeichern von Produktionsgütern, mit wenigstens zwei vertikal übereinander angeordneten Speichereinheiten, die jeweils ein angetriebenes Speicherband in horizontaler Erstreckung aufweisen, dadurch weitergebildet, daß die Speichereinheiten horizontal bewegbar sind und an einem bestimmten horizontalen Auslenkungsort, der sogenannten Befüllposition, mit Produktionsgütern von einer Handhabungseinheit direkt befüllbar sind.

Der Erfindung liegt die Idee zugrunde, daß der senkrechte Hub einer Handhabungseinheit, beispielsweise eines Roboters, dazu genutzt wird, um die zwischenzuspeichernden Teile mittels dieses Roboters direkt in die jeweils entsprechenden Ebenen der Speicherbänder zu verbringen und somit die bei dem heutigen Stand der Technik notwendige, anlageneigene Hubstation überflüssig werden zu lassen. Hierzu fahren die einzelnen Speichereinheiten, die vorzugsweise Endlosspeicherbänder aufweisen über Linearführungen in eine sogenannte Befüllposition, an der der Roboter die zwischenzuspeichernden Teile auf die Speicherbänder der Speichereinheiten übergibt. D.h., daß die jeweilige Speichereinheit um eine entsprechende Länge horizontal vorgefahren wird, so daß der Roboter die Teile nur abzulegen braucht. Ist der Übergabevorgang beendet, taktet das Speicherband der Speichereinheit um eine Position vor, so daß eine weitere Übergabe vom Roboter auf das Speicherband erfolgen kann.

Sobald ein Speicherband vollständig gefüllt ist, fährt die Speichereinheit wieder horizontal zurück in die Grundposition und eine andere, freie Speichereinheit fährt vor und übernimmt jetzt die nächsten Teile vom Roboter. Dieser Vorgang wiederholt sich, bis alle Speichereinheiten gefüllt sind.

Vorzugsweise sind die einzelnen Speichereinheiten, die jeweils ein Endlosspeicherband aufweisen in einem Rahmengestell vertikal übereinander angeordnet und zugleich jeweils zum horizontalen Verfahren innerhalb der Rahmenanordnung mit Linearführungsantrieben versehen. Jenachdem welche Speichereinheit aktuell von dem Roboter beladen wird, wird diese Speichereinheit durch ihren Linearantrieb in die Befüllposition verfahren. Der Roboter, der die zwischenzuspeichernden Produktgüter beispielsweise aus einer Maschine entnimmt, muß lediglich durch entsprechende Hubbewegung das Niveau der zu beladenden Speichereinheit erreichen und dort die Übergabe des Produktgutes vornehmen.

Vorzugsweise werden als Linearführungsantriebe pneumatische, hydraulische oder elektromotorische Antriebe verwandt.

Eine Gesamtspeicheranlage muß nicht nur aus einem, sondern kann auch aus zwei oder sogar auch aus mehreren Zwischenspeichersystemen bestehen. Dabei kann die Anordnung der einzelnen Zwischenspeichersysteme zueinander symmetrisch gegenüberliegend sein, so daß sie mit ihren Stirnseiten zueinander angeordnet sind; sie kann aber auch in jeder anderen Form erfolgen. Wesentlich ist nur, daß die einzelnen Speichereinheiten durch den horizontalen Verfahrweg, dessen Länge auch noch bei den einzelnen Zwischenspeichersystemen durchaus unterschiedlich lang sein kann, mittels der Linearführungen in den Ablagebereich des Handhabungsgerätes gefahren werden können. So können durchaus zwei oder sogar mehrere Zwischenspeicherungssysteme in entsprechender Anordnung zueinander als Gesamtanlage mit erhöhter Speicherkapazität über ein Handhabungsgerät bedient werden.

Um den Nachteil der Verwendung einzelner Linearführungsantriebe, die bei jeder einzelnen Speicherbandeinheit vorgesehen sind, zu vermeiden, ist ferner erfindungsgemäß eine Vorrichtung zum Zwischenspeichern von Produktionsgütern mit einer horizontal, in einem Trägerrahmen angeordneten Speichereinheit, die ein angetriebenes Endlosspeicherband aufweist und horizontal in dem Trägerrahmen bewegbar ist, derart ausgebildet, daß die horizontale Auslenkung der Speichereinheit derart erfolgt, daß das mit einem bestimmten Umlaufsinn angetriebene Endlosspeicherband relativ zum Trägerrahmen fixierbar ist, bis eine gewünschte Auslenkposition erreicht ist und entsprechend eine Rückführung der ausgelenkten Speichereinheit in die Ausgangsposition mit umgekehrten Umlaufsinn des angetriebenen Endlosspeicherbandes erfolgt.

Diesem Erfindungsgedanken liegt die Idee zugrunde, daß der lineare, horizontale Vorschub der einzelnen Speichereinheiten nicht durch seperate Antriebseinheiten vorgenommen wird, sondern durch die ohnehin vorhandenen Antriebe für die Umlaufbewegung der Speicherbänder selbst.

Die Erfindung wird nachstehend anhand von Ausführungsbeispielen unter Bezugnahme auf die Zeichnung exemplarisch beschrieben. Es zeigen:
- Fig. 1: Zwischenspeichersystem nach dem Stand der Technik;
- Fig. 2: erfindungsgemäße Ausführungsform des Zwischen speichersystems,
- Fig. 3: erfindungsgemäße Ausführungsform des Zwischenspeichersystems in Kombination mit einer Handhabungseinheit und einer Maschine zur Produktionsgutherstellung und
- Fig. 4: Seitenansicht eines Zwischenspeichersystems mit einseitig angebrachten motorischen Antrieb für die Speicherbänder sowie
- Fig. 5: Querschnittsdarstellung durch ein Speicherband mit der erfindungsgemäßen Arretiermöglichkeit.

In der oberen Darstellung gemäß Fig. 1 ist eine Seitenansicht eines an sich bekannten Zwischenspeichersystems dargestellt, das zwei symmetrisch zueinander angeordnete Zwischenspeichereinheiten 1 aufweist, die über jeweils mehrere, horizontal angeordnete Speichereinheiten 2 verfügen. Jede einzelne horizontal angeordnete Speichereinheit ist in einem Rahmen 4 fest angeordnet und weist darüberhinaus ein endloses Speicherband 5 auf. Eine nicht in Fig. 1 dargestellte Handhabungseinheit entnimmt einer ebenso nicht in der Fig. 1 dargestellten Maschine die zwischenzuspeichernden Teile und übergibt diese der Hubeinheit 3, die ihre Ablagefläche 3' auf das Niveau einer entsprechenden Speichereinheit fährt, so daß eine Übergabe der zwischenzuspeichernden Teile von der Hubeinheit auf das Speicherband einer Speichereinheit 2 ermöglicht werden kann.

Nach jeder Übergabe verfährt das Speicherband 5 um eine weitere Position, so daß das Speicherband für eine neue Beladung bereit ist. Der vorstehende Prozeß wiederholt sich so oft, bis eine Speichereinheit vollständig gefüllt ist. Sodann werden weitere freie Speichereinheiten durch die Hubeinheit angefahren und diese ebenso befüllt.

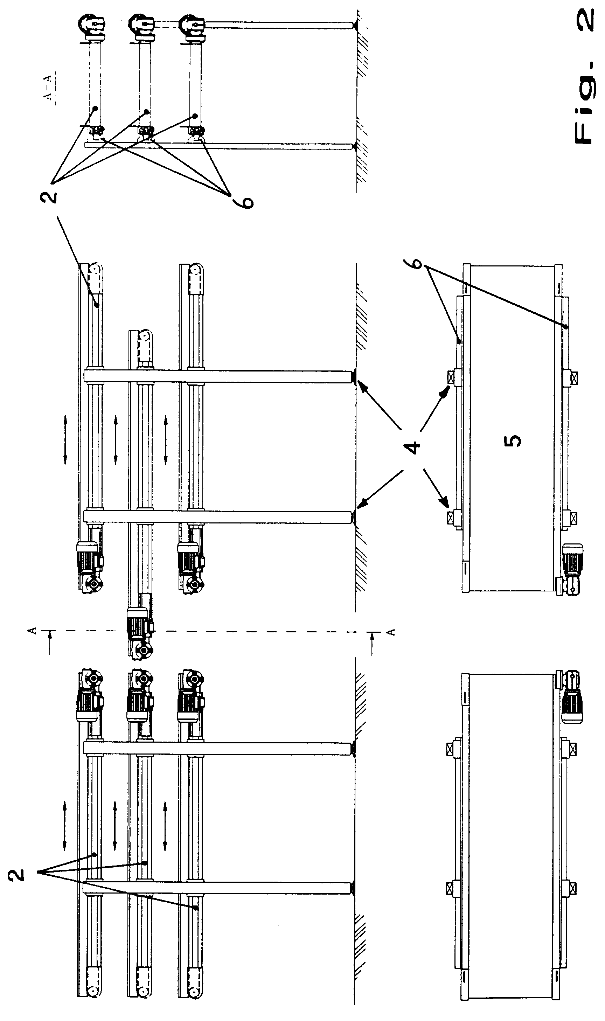

In Fig. 2 ist in der Seiten-, Drauf- und Vorderansicht ein erfindungsgemäßes Zwischenspeichersystem dargestellt, welches keine eigene Hubeinheit zur Beladung der einzelnen Speichereinheiten benötigt. Aus der Seitendarstellung ist zu entnehmen, daß die einzelnen Speichereinheiten 2 mit Linearführungen 6 versehen sind, die die vollständige Speichereinheit aus einer Grundposition horizontal in eine Befüllposition überführen, die durch die gestrichelte Linie A angedeutet ist. Die Lineareinheiten 2 können zu diesem Zweck pneumatisch, hydraulisch oder auch elektromotorisch angetrieben sein. Durch die seitliche Bewegungsmöglichkeit der einzelnen Speichereinheiten 2 ist zur Befüllung diejenige in die Befüllposition verfahren, die durch einen in Figur 2 nicht dargestellten Roboter mit zwischenzuspeichernden Gütern beladen wird. Die von der Hubeinheit gemäß Figur 1 ermöglichte Vertikalbewegung besorgt nun der Roboter, der die Teile aus der Maschine entnimmt und diese mittels seines vertikalen Verfahrweges direkt an den Ort der Übergabe an die Speichereinheit in die jeweilige Ebene verfährt. Die in Figur 1 dargestellte Hubeinheit entfällt somit. Wie aus der Draufsicht und der Vorderansicht der Figur 2 zu entnehmen ist, sind die Lineareinheiten 6 seitlich an den Speichereinheiten angeordnet, so daß diese Speichereinheiten im Rahmen 4 kontrolliert gesteuert verfahren werden können, wobei der Antrieb dieser Lineareinheiten 6 pneumatisch, hydraulisch oder elektromotorisch erfolgen kann.

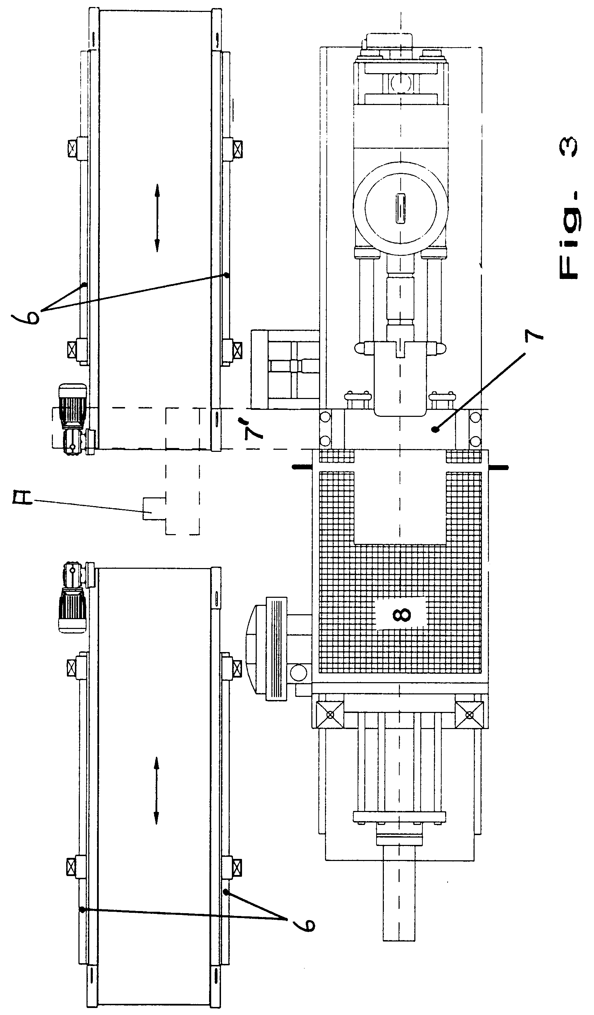

Aus Fig. 3 ist ein Zusammenwirken der erfindungsgemäßen Zwischenspeichereinheit, dem quer dazu angeordneten Roboter 7 und der parallel zur Speichereinheit angeordneten Maschine 8 zu entnehmen. Die Anordnung des Roboters, wie auch der Speichereinheit zur Maschine ist durchaus frei wählbar und in Figur 3 nur beispielhaft dargestellt, sie kann ohne weiteres auch anders erfolgen. Wesentlich ist, daß der Roboter 7 die zwischenzuspeichernden Produktionsgüter aus einer Maschine 8 entnimmt, und diese mit seinem Roboterarm 7', der in Fig. 3 gestrichelt dargestellt ist, an die Befüllposition A verfährt, an der der Roboter das Produktionsgut auf eine in der entsprechenden Ebene bereitstehende Speichereinheit übergibt.

Mit der vorgestellten Zwischenspeichereinheit sind mehrere Vorteile verbunden. So ist das Zwischenspeicherkonzept auf keine spezifischen Teile festgelegt und kann in den unterschiedlichsten Industriebereichen eingesetzt werden. Ebenso ist die Größe der Anlage variabel und richtet sich nach den spezifischen Anforderungen und räumlichen Verhältnissen des Anwenders. Beispielsweise läßt sich die Anzahl der einzelnen Etagen, in denen die Speichereinheiten angeordnet sind, prinzipiell unbegrenzt erweitern. Jedoch richtet sich die Maximalbauhöhe der Zwischenspeicheranordnung nach dem maximal senkrechten Verfahrweg des Roboters, der jedoch geeignet gewählt sein kann.

Länge und Breite der Speicherbänder sind ebenfalls grundsätzlich nicht begrenzt. Auch sie richten sich nach den Anforderungen bezüglich des Speichervolumens und nach den räumlichen Gegebenheiten des Anwenders.

Die geometrische Anordnung zweier oder mehrerer Zwischenspeicherungssysteme zu einer erweiterten Gesamtspeicheranlage ist ebenfalls grundsätzlich nicht begrenzt. Sie kann grundsätzlich in jeder geometrischen Form erfolgen und richtet sich im wesentlichen ebenfalls nach den spezifischen Anforderungen in puncto Speichervolumen, sowie nach den räumlichen Gegebenheiten des Anwenders.

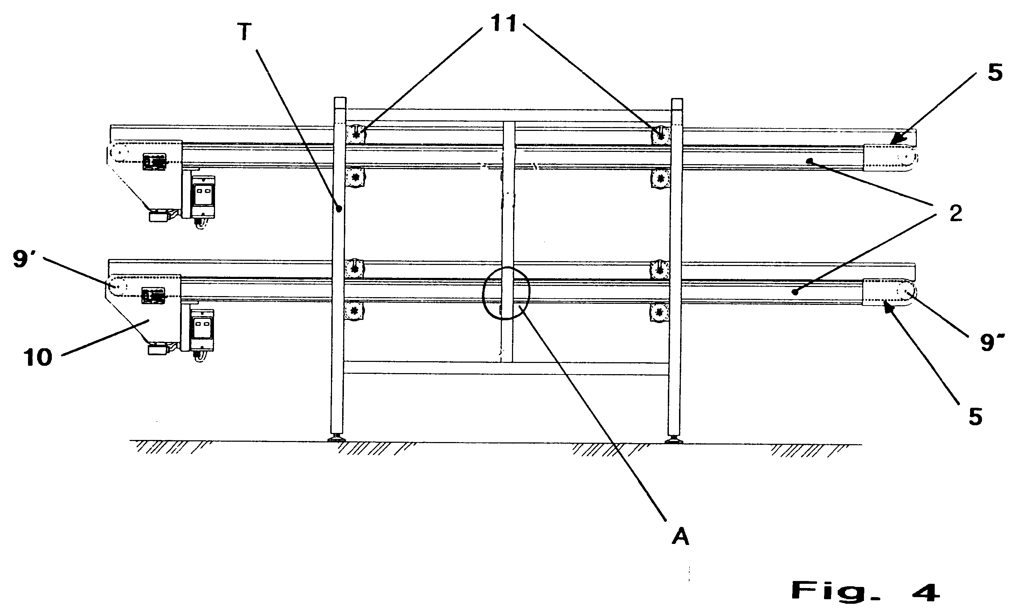

In dem in Fig. 4 dargestellten Ausführungsbeispiel sind zwei vertikal in einem Trägerrahmen übereinander angeordnete Speichereinheiten 2 vorgesehen. Die Speichereinheiten 2 bestehen jeweils aus einem endlos umlaufenden Speicherband 5, das über zwei Umlaufrollen 9' und 9'' geführt ist. In dem in der Fig. 4 dargestellten Ausführungsbeispiel ist in der Nähe der Umlenkrolle 9' eine Antriebseinheit 10 vorgesehen, die das Speicherband 5 in beliebig einstellbarer Weise antreibt. So ermöglicht die Antriebseinheit 10 sowohl einen Taktbetrieb, der insbesondere während des Beladevorganges der Speicherbänder von Vorteil ist, als auch einen kontinuierlichen Antrieb, der für die erfindungsgemäße Auslenkung der gesamten Speichereinheit von Vorteil ist. Denkbar sind auch Antriebseinheiten, die unmittelbar eine Umlenkrolle, beispielsweise 9', in Rotation versetzen.

Die Speichereinheiten 2 sind an dem Trägergestell T auf Laufrädern 11 gelagert, so daß die Speichereinheiten 2 grundsätzlich horizontal verfahrbar sind.

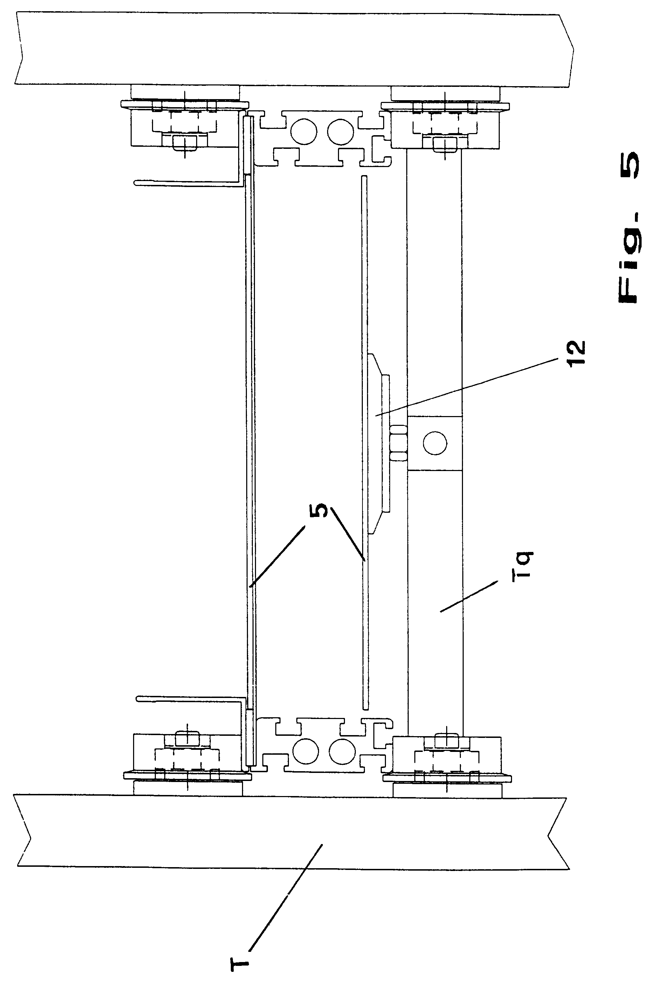

Das in Fig. 4 dargestellte Kreissegment A zeigt die Lage der Querschnittsdarstellung gemäß Fig. 5 an. Zwischen dem Träger T ist das endlos umlaufende Speicherband 5 geführt, das zwischen den nicht in der Fig. 5 dargestellten Umlenkrollen gespannt ist. An einem Querträger Tq, der fest zwischen dem Trägerrahmen T eingebaut ist, sitzt eine Arretiereinheit 12, die im Falle der Fig. 5, ein Vakuumsauger ist, der von unten her gegen die Oberfläche des Speicherbandes 5 führbar ist. Durch den Saugeffekt kann das angetriebene Speicherband 5 gegenüber dem feststehenden Träger T gestoppt werden, so daß die Antriebsenergie der Antriebseinheiten 10 direkt in die horizontale Bewegung der gesamten Speichereinheit 2 übergeht. Da das Speicherband über die Arretiervorrichtung geklemmt ist und daher selbst keine Linearbewegung ausführen kann, überträgt sich die Linearbewegung direkt auf die Speichereinheit selbst, so daß sich nun das zwischen den Laufrollen 11 gelagerte Speicherband mit der halben Abtriebsgeschwindigkeit der Antriebswelle der Antriebseinheit 10 linear nach vorne in eine Ablageposition schiebt.

Nach Erreichen dieser Position wird die Antriebseinheit 10 über ein Schaltelement, welches das Erreichen der gewünschten Position der Speichereinheit signalisiert, abgeschaltet. Die Arretiervorrichtung öffnet sich, und das Speicherband kann nun wieder frei laufen. Die Befüllung des Speicherbandes erfolgt in an sich bekannter Weise durch einen getakteten Betrieb des Speicherbandes, so daß die auf das Speicherband aufgelegten Produktionsgüter von der Befüllposition taktweise weggeführt werden.

Nach vollständiger Befüllung des Bandes erfolgt der gleiche Vorgang umgekehrt, wobei der Antriebsmotor 10 des Speicherbandes und somit auch die Speichereinheit selbst in die andere Richtung laufen, bis das dort angebrachte signalgebende Schaltelement erreicht ist, welches die Antriebseinheit wieder abschaltet und die Arretiervorrichtung wieder öffnet. Danach befindet sich das Förderband wieder in der Ausgangsposition und kann nun von einem Verarbeiter abgeräumt werden.

Um zu verhindern, daß auf dem Speicherband aufliegende Produktionsgüter während der Rückwärtsbewegung der Speichereinheit von dieser am Speicherbandende runterfallen, ist eine Auffangvorrichtung am Speicherbandende vorgesehen, die die Produktionsgüter auf dem Speicherband hält. Vorzugsweise sind parallel zu den SPeicherbandseiten FÜhrungsschienen angebracht, die ein seitliches Herunterfallen verhindern. Am Bandende ist ferner quer zur Laufrichtung eine Art Anschlag vorgesehen, gegen den die Produktionsgüter geschoben werden, der sie jedoch daran hindert vom Speicherband zu fallen.

## Patentansprüche

1. Vorrichtung zum Zwischenspeichern von Produktionsgütern, mit wenigstens zwei vertikal übereinander angeordneten Speichereinheiten, die jeweils ein angetriebenes Speicherband in horizontaler Erstreckung aufweisen, dadurch **gekennzeichnet**, daß die Speichereinheiten horizontal bewegbar sind und an einem bestimmten horizontalen Auslenkungort, der Befüllposition, mit Produktionsgütern von einer Handhabungseinheit direkt befüllbar sind.

2. Vorrichtung nach Anspruch 1,
dadurch **gekennzeichnet**, daß jede Speichereinheit jeweils einen Linearführungsantrieb zur horizontal Auslenkung aufweist.

3. Vorrichtung nach Anspruch 1 oder 2,
dadurch **gekennzeichnet**, daß die Handhabungseinheit zur Übergabe der Produktionsgüter an die Speichereinheiten durch vertikale Hubbeweggung an die Befüllposition der einzelnen Speicherbänder fährt.

4. Vorrichtung nach einem der Ansprüche 1 bis 3,
dadurch **gekennzeichnet**, daß nach jeder Übergabe eines Produktionsgutes von der Handhabungseinheit auf die Speichereinheit das Speicherband taktweise um jeweils eine Beladeposition verfährt.

5. Vorrichtung nach einem der Ansprüche 1 bis 4,
dadurch **gekennzeichnet**, daß nach Befüllung einer Speichereinheit diese aus der Befüllposition horizontal in eine Grundstellung zurückfährt, eine nächste Speichereinheit in die Befüllposition fährt, an der sie durch entsprechende Hubbewegung der Handhabungseinheit befüllbar ist.

6. Vorrichtung nach einem der Ansprüche 1 bis 5,
dadurch **gekennzeichnet**, daß die Speichereinheiten in einer vertikalen Rahmenvorrichtung angeordnet sind.

7. Vorrichtung nach einem der Ansprüche 1 bis 6,
dadurch **gekennzeichnet**, daß die Speichereinheiten an ihren beiden Speicherbandenden frei zugänglich sind.

8. Vorrichtung nach einem der Ansprüche 1 bis 7,
dadurch **gekennzeichnet**, daß der Horizontalantrieb der Speichereinheiten pneumatisch, hydraulisch oder elektromotorisch ist.

9. Vorrichtung nach einem der Ansprüche 1 bis 8,
dadurch **gekennzeichnet**, daß die Handhabungseinheit ein Roboter ist, der die Produktionsgüter direkt auf die Speichereinheiten verbringt.

10. Vorrichtung nach einem der Ansprüche 1 bis 9,
dadurch **gekennzeichnet**, daß zwei oder mehrere Zwischenspeichersysteme, die jeweils aus mehreren übereinander angeordneten Speichereinheiten bestehen, in jeder geometrischen Form zueinander angeordnet sein können, wobei die Befüllposition der Handhabungseinheit zwischen den einzelnen Zwischenspeicherungssystemen positioniert ist, und die einzelnen Speichereinheiten über den horizontalen Verfahrweg der Linearführungen diese Ablageposition erreichbar sind.

11. Vorrichtung nach Anspruch 10,
dadurch **gekennzeichnet**, daß die Längen der einzelnen horizontalen Verfahrwege der Linearführungen unterschiedlich lang sind.

12. Vorrichtung zum Zwischenspeichern von Produktionsgütern mit einer horizontal, in einem Trägerrahmen angeordneten Speichereinheit, die ein angetriebenes Endlosspeicherband aufweist und horizontal in dem Trägerrahmen bewegbar ist,
dadurch **gekennzeichnet**, daß die horizontale Auslenkung der Speichereinheit derart erfolgt, daß das mit einem bestimmten Umlaufsinn angetriebene Endlosspeicherband relativ zum Trägerrahmen fixierbar ist, bis eine gewünschte Auslenkposition erreicht ist und entsprechend eine Rückführung der ausgelenkten Speichereinheit in die Ausgangsposition mit umgekehrten Umlaufsinn des angetriebenen Endlosspeicherbandes erfolgt.0

13. Vorrichtung nach Anspruch 12,
dadurch **gekennzeichnet**, daß an der Unterseite der Speichereinheit das Endlosspeicherband durch eine Arretiervorrichtung fixierbar ist.

14. Vorrichtung nach Anspruch 13,
dadurch **gekennzeichnet**, daß die Arretiervorrichtung am Trägerrahmen befestigt ist.

15. Vorrichtung nach Anspruch 13 oder 14,
dadurch **gekennzeichnet**, daß die Arretiervorrichtung ein Vakuumsauger ist, der durch Ansaugen der Oberfläche des Endlosspeicherbandes die Bewegung des Speicherbandes relativ zum Trägerrahmen abstoppt.

16. Vorrichtung nach Anspruch 13 oder 14,
dadurch **gekennzeichnet**, daß die Arretiervorrichtung mechanisch, pneumatisch, hydraulisch oder elektromotorisch betreibbar ist.
